# EUROPÄISCHE PATENTANMELDUNG

(11) **EP 0 634 302 A1**
(43) Veröffentlichungstag der Anmeldung: **18.01.1995**
(21) Anmeldenummer: 94109215.7
(22) Anmeldetag: 15.06.1994
(51) Int. Cl.: B60N 2/00, B62D 1/18

(54) **Kraftfahrzeug mit zwei Lenk- und Bedienungseinrichtungen**

(30) Priorität: 15.07.1993 DE 4323783
(71) Anmelder: Schmidt-Lutz, Rolf, D-89349 Burtenbach (DE)
(72) Erfinder: Schmidt-Lutz, Rolf, D-89349 Burtenbach (DE)
(74) Vertreter: Schieschke, Klaus, Dipl.-Ing.

(57) **Zusammenfassung**

Die Erfindung bezieht sich auf ein Kraftfahrzeug 20 mit im Bereich eines Fahrersitzes 4 angeordneter Lenk- und Bedieneinrichtung 1 und mit Begleitsitzen 2. Erfindungsgemäß ist einem der Begleitsitze 2 eine zweite unabhängige Lenk- und Bedieneinrichtung 1' zugeordnet, wobei das Kraftfahrzeug wechselweise von einem der beiden Lenk- und Bedieneinrichtungen 1, 1' steuerbar ist.

## Beschreibung

Die Erfindung bezieht sich auf ein Kraftfahrzeug, mit im Bereich eines Fahrersitzes angeordneter Lenk- und Bedieneinrichtung und mit Begleitsitzen.

Ein Kraftfahrzeug wird normalerweise nicht mit allen vorhandenen Sitzplätzen voll belegt gefahren, sondern meistens sind ein oder mehrere Sitzplätze ungenutzt.

Ein weiterer Fall bei normaler Handhabung ist, daß die Begleitperson des Fahrers neben ihm sitzt bzw. sitzen möchte. Andererseits existieren Dienst- und Taxifahrzeuge, in welchen der Fahrgast wahlweise hinter dem Fahrer sitzen möchte.

Will man nun eine Kraftfahrzeugkarossierie kleiner und leichter gestalten, ohne den jeweiligen Platzbedarf der Personen zu verkleinern und auch die Lebensdauer des Kraftfahrzeuges nicht zu verkürzen, so ist dies nur möglich, wenn die Zahl der Sitzplätze reduziert wird. Eine derartige Reduzierung sollte jedoch die gewohnten Handhabungen nicht verändern. Es sollten vor allem die Sitzpositionen von Fahrer und Beifahrern beibehalten werden.

Der vorliegenden Erfindung liegt damit die Aufgabe zugrunde, ein Kraftfahrzeug der eingangs genannten Art zu schaffen, welches bei einfachem Aufbau und Reduzierung des Platzbedarfes gewährleistet, daß die bisherige Handhabung beibehalten wird.

Diese Aufgabe wird erfindungsgemäß dadurch gelöst, daß einem der Begleitsitze eine zweite unabhängige Lenk- und Bedieneinrichtung zugeordnet ist und daß das Kraftfahrzeug wechselweise von einem der beiden Lenk- und Bedieneinrichtungen steuerbar ist. Es ergibt sich damit erfindungsgemäß eine Konstruktion, bei welcher eine zweite zusätzliche Lenk- und Bedieneinrichtung zum kompletten unabhängigen Führen, Lenken und Bedienen des Fahrzeuges hinter dem üblichen Fahrersitz Anwendung findet.

Der übliche Fahrersitz wird zweckmäßigerweise in weiterer Ausgestaltung der Erfindung in die Mitte versetzt, wobei bei Einbau eines Notsitzes eine entsprechende Anordnung zu treffen ist, damit genügend Bedienraum vorliegt. Der Fahrer kann nun wahlweise das Fahrzeug vom Fahrersitz oder einem Beifahrersitz lenken.

Es ergeben sich daraus folgende Vorteile:
1. Durch Wegfall des sehr selten benutzten fünften Sitzplatzes kann die Kraftfahrzeugkarosserie wesentlich verkleinert werden.
2. Sitzt der Fahrer vorn auf dem Fahrersitz, so erfüllt er entweder die Forderungen der Dienst- und Taxifahrzeuge oder er nutzt bei Bedarf die volle rückwärtige Zahl der Begleitsitze als Gepäckraum oder als Transportraum für die Begleitpersonen wirtschaftlich aus.
3. Sitzt der Fahrer hinten auf dem seitlich versetzten Begleitsitz, so verliert er zwar vorn einen Platz, jedoch erfüllt er die wichtige Forderung, daß die Begleitperson neben dem Fahrer sitzt.

Die häufigsten Nutzformen bleiben dadurch erfindungsgemäß voll erhalten und auch der Platzbedarf je Person wird nicht reduziert.

Ein Sonderfall ergibt sich daraus, daß ein seitlicher Notklappsitz eingesetzt werden kann, welcher zu einem zusätzlichen Platzangebot führt.

Die Umschaltung der einen Lenk- und Bedieneinrichtung in die andere Lenk- und Bedieneinrichtung erfolgt in weiterer Ausgestaltung der Erfindung durch ein Umschaltelement zur Aktivierung eines der beiden vorgenannten Einrichtungen. Bei einer derartigen Aktivierung kann gleichzeitig die Rückenlehne des Fahrersitzes umgeklappt werden, so daß der Fahrer bei Betätigung der zweiten Lenk- und Bedieneinrichtung ein volles Sichtfeld hat. Außerdem wird vorteilhafterweise die vordere Lenk- und Bedieneinrichtung abgedeckt.

Durch die besondere Gestaltung des erfindungsgemäßen Kraftfahrzeuges ergibt sich eine Reduzierung des Fahrzeuggewichtes, so daß das Kraftfahrzeug auch für Elektroantriebe oder weitere neuartige Antriebe wie bspw. Wasserstoffantriebe einsetzbar ist. Die durch die besondere Gestaltung des erfindungsgemäßen Kraftfahrzeuges eingesparten Gewichte können zur Aufnahme von Batterien oder Tankbehältern dienen. Zur Aufnahme dieser zusätzlichen Elemente sowie zur leichteren Verbindung der zweiten Lenk- und Bedieneinrichtung kann das Kraftfahrzeug einen doppelten Boden im Kraftfahrzeugkarosseriebereich aufweisen.

Vorteilhafte Weiterbildungen ergeben sich aus den weiteren Unteransprüchen.

Die Erfindung wird nachfolgend anhand von in der Zeichnung dargestellten Ausführungsbeispielen näher beschrieben.

In der Zeichnung zeigen:
- Fig. 1: eine Seitenansicht eines Personenkraftwagens in schematischer Darstellung;
- Fig. 2: eine Draufsicht auf den Kraftwagen nach Fig. 1;
- Fig. 3: eine andere Ausführungsmöglichkeit der Erfindung in Seitenansicht, wobei der Kraftwagen als Cabrio ausgebildet ist;
- Fig. 4: eine Draufsicht auf das erfindungsgemäße Kraftfahrzeug bei der Gestaltung als Lastkraftwagen.

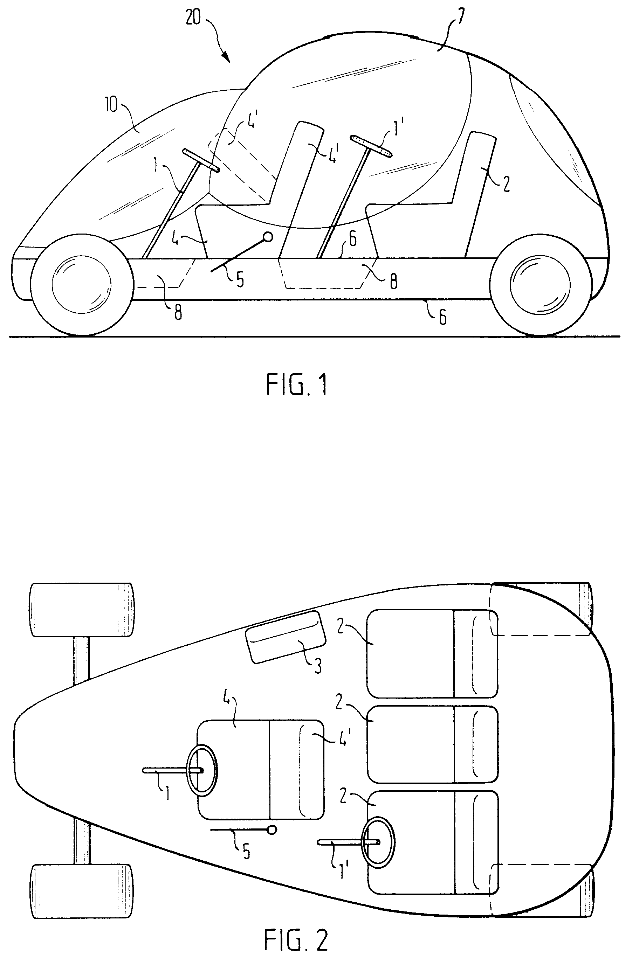

In Fig. 1 und 2 ist ein Kraftfahrzeug 20 dargestellt, welches im Bereich eines Fahrersitzes 4 eine Lenk- und Bedieneinrichtung 1 aufweist. Aus Fig. 1 und 2 geht hervor, daß hinter dem Fahrersitz 1 bspw. drei Begleitsitze 2 angeordnet sind. Der Fahrersitz 4 befindet sich etwa in der Mitte zur Fahrzeuglängsachse, wobei vorteilhafterweise ein gegenüber diesem Fahrersitz 4 seitlich rückversetzter Begleitsitz 2 mit einer zweiten, unabhängigen Lenk- und Bedieneinrichtung 1' versehen ist. Das Kraftfahrzeug 20 ist damit wechselweise von einem der beiden Lenk- und Bedieneinrichtungen l bzw. 1' steuerbar. Seitlich neben dem Fahrersitz 4 kann ein Notsitz 3 angeordnet sein.

Im Bereich des Fahrersitzes 4 befindet sich ein Umschaltelement 5 zur Aktivierung eines der beiden Lenk- und Bedieneinrichtungen 1, 1'. Bei Aktivierung der zweiten Lenk- und Bedieneinrichtung 1' ist hierbei die Rückenlehne 4' des Fahrersitzes 4 umgeklappt, wie in Fig. 1 in gestrichelter Form dargestellt.

Damit hat der Fahrer, welcher sich auf dem linken äußeren Begleitsitz 2 befindet und die zweite Lenk- und Bedieneinrichtung 1' bedient, volle Sicht durch die vorteilhafterweise gewölbt ausgebildete feststehende Windschutzscheibe 10.

Um den Aus- bzw. Einstieg zu dem Fahrersitz 4 und zu den Begleitsitzen 2 zu erleichtern, ist eine zweite, allseitig gewölbte Windschutzscheibe 7 vorgesehen, welche seitlich geöffnet oder hochgeklappt werden kann.

Das erfindungsgemäße Kraftfahrzeug ist darüberhinaus mit einem doppelten Boden 6 ausgerüstet, welcher zur Aufnahme der Elemente der beiden Lenk- und Bedieneinrichtungen 1 und 1' dient. Weiterhin können zusätzliche Kraftfahrzeugaggregate, bspw. Elektrobatterien oder zusätzliche Tanks im Bereich dieses doppelten Bodens angeordnet werden. Im Bereich des Fahrersitzes 4 und der Begleitsitze 2 ist der doppelte Boden 6 mit Fußmulden 8 ausgestattet, so daß sich ein guter Fahrkomfort ergibt.

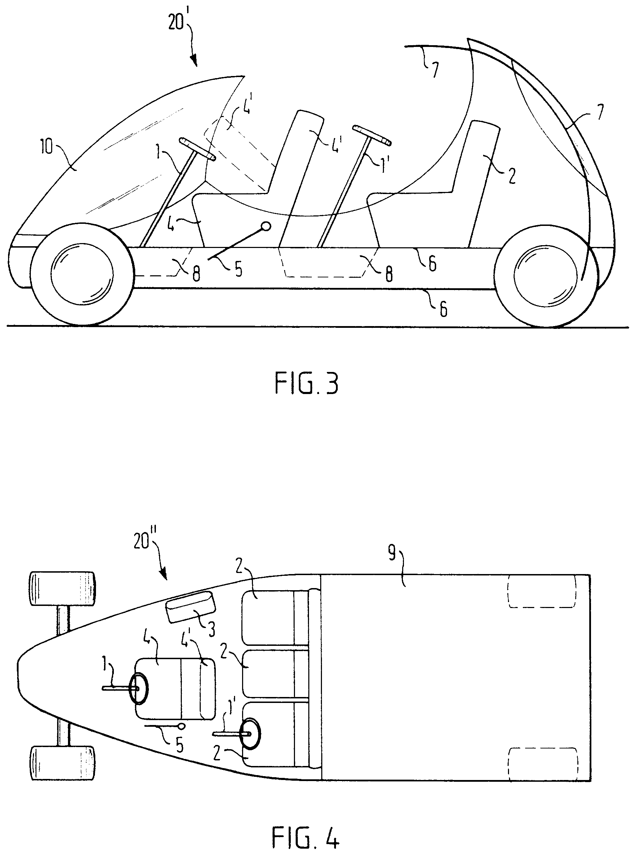

Bei der Ausführung nach Fig. 3 ist das erfindungsgemäße Kraftfahrzeug 20' als Cabriolet ausgebildet. Hierzu kann die zweite, allseitig gewölbte Windschutzscheibe, wie schematisch dargestellt, nach hinten zurückgeklappt werden, so daß sich ein oben offenes Kraftfahrzeug ergibt. Wiederum ist dieses Kraftfahrzeug so gestaltet, daß hinter dem etwa mittig angeordneten Fahrersitz 4 mehrere Begleitsitze 2 vorgesehen sind.

Einer dieser Begleitsitze 2 weist die zweite, unabhängige Lenk- und Bedieneinrichtung 1 auf, während dem Fahrersitz die erste Lenk- und Bedieneinrichtung zugeordnet ist.

Auch bei dieser Ausführungsform kann ein Umschaltelement 5 in Form eines Umschalthebels Anwendung finden, wodurch eine der beiden Lenk- und Bedieneinrichtungen 1 bzw. 1' aktiviert wird. Weiterhin läßt sich analog der Ausführungsform nach Fig. 1 und 2 bei Aktivierung der zweiten Lenk- und Bedieneinrichtung 1' die Rückenlehne 4' umklappen, so daß auch bei diesem Cabrio sehr gute Sichtverhältnisse gegeben sind.

Die erfindungsgemäße Gestaltung ist auch gemäß Fig. 4 bei Lastkraftwagen 20'' anwendbar. Hier ist hinter den drei Begleitsitzen 2 eine Ladefläche 9 zur Aufnahme von Ladegut vorgesehen. Den drei Begleitsitzen 2 ist der mittige Fahrersitz 4 mit umklappbarer Rückenlehne 4' vorgeordnet. Es finden analog den vorgenannten Bauformen zwei unabhängig voneinander wirkende Lenk- und Bedieneinrichtungen 1 und 1' Anwendung, wobei wiederum über ein Umschaltelement 5 eine der beiden Einrichtungen aktiviert wird.

Durch den Einsatz der zweiten unabhängigen Lenk- und Bedieneinrichtung 1' wird ein neuartiges Kraftfahrzeug geschaffen, welches bei gleichbleibendem gewohntem Fahrkomfort zu einer Gewichtsreduzierung führt.

## Patentansprüche

1. Kraftfahrzeug, mit im Bereich eines Fahrersitzes angeordneter Lenk- und Bedieneinrichtung und mit Begleitsitzen,
dadurch gekennzeichnet,
daß einem der Begleitsitze (2) eine zweite unabhängige Lenk- und Bedieneinrichtung (1') zugeordnet ist und
daß das Kraftfahrzeug (20, 20', 20'') wechselweise von einem der beiden Lenk- und Bedieneinrichtungen (1, 1') steuerbar ist.

2. Kraftfahrzeug nach Anspruch 1, dadurch gekennzeichnet, daß der Fahrersitz (4) etwa mittig zur Fahrzeuglängsachse den Begleitsitzen (2) vorgeordnet ist.

3. Kraftfahrzeug nach Anspruch 1 und 2, dadurch gekennzeichnet, daß ein gegenüber dem Fahrersitz (4) seitlich rückversetzter Begleitsitz (2) mit der zweiten Lenk- und Bedieneinrichtung ausgestattet ist.

4. Kraftfahrzeug nach einem der vorhergehenden Ansprüche, dadurch gekennzeichnet, daß die zweite Lenk- und Bedieneinrichtung (1') fernsteuerbar ist.

5. Kraftfahrzeug nach einem der vorhergehenden Ansprüche, dadurch gekennzeichnet, daß seitlich neben dem Fahrersitz (4) ein Notsitz (3) angeordnet ist.

6. Kraftfahrzeug nach einem der vorhergehenden Ansprüche, gekennzeichnet durch ein Umschaltelement (5) zur Aktivierung eines der beiden Lenk- und Bedieneinrichtungen (1, 1').

7. Kraftfahrzeug nach Anspruch 6, dadurch gekennzeichnet, daß bei Aktivierung der zweiten Lenk- und Bedieneinrichtung (1') die Rückenlehne (4') des Fahrersitzes (4) umklappbar ist.

8. Kraftfahrzeug nach einem der vorhergehenden Ansprüche, dadurch gekennzeichnet, daß zur Aufnahme der Elemente der beiden Lenk- und Bedieneinrichtungen (1, 1') und/oder weiterer Kraftfahrzeugaggregate die Karosserie einen doppelten Boden (6) aufweist.

9. Kraftfahrzeug nach Anspruch 8, dadurch gekennzeichnet, daß der doppelte Boden (6) mit Fußmulden (8) im Bereich des Fahrersitzes (4) und der Begleitsitze (2) versehen ist.

10. Kraftfahrzeug nach einem der vorhergehenden Ansprüche, gekennzeichnet durch eine feststehende und eine zurückgesetzte, nach hinten zurückklappbare Windschutzscheibe (7), welche den Bereich der beiden Lenk- und Bedieneinrichtungen (1, 1') überdeckt.

11. Kraftfahrzeug nach Anspruch 10, dadurch gekennzeichnet, daß beide Windschutzscheiben (10, 7) jeweils allseitig gewölbt sind.

12. Kraftfahrzeug nach einem der vorhergehenden Ansprüche, gekennzeichnet durch Verwendung der beiden Lenk- und Bedieneinrichtungen (1, 1') in einem Personenkraftwagen (20, 20') oder einem Lastkraftwagen (20'').
